# EUROPEAN PATENT APPLICATION

(11) **EP 2 660 446 A1**
(43) Date of publication of application: **06.11.2013**
(21) Application number: 10861314.2
(22) Date of filing: 28.12.2010
(51) Int. Cl.: F02D 41/34, F02D 13/02, F02D 23/00

(54) **IN-CYLINDER INJECTION-TYPE INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: MORI, Sachio, Toyota-shi Aichi-ken 471-8571 (JP)
(74) Representative: Kuhnen & Wacker
(86) International application number: PCT/JP2010/073770
(87) International publication number: WO 2012/090320

(57) **Abstract**

An object of the present invention is to provide a direct-injection internal combustion engine capable of suppressing the occurrence of knocking and providing increased combustion stability. The internal combustion includes a supercharger for supercharging intake air that flows into the internal combustion engine, and a fuel injection valve for directly injecting fuel into a combustion chamber in the internal combustion engine. After an exhaust valve and an intake valve are opened during an exhaust stroke, the intake valve and the exhaust valve close at a timing advanced from an intake top dead center, and then the intake valve opens at a timing retarded from the intake top dead center during an intake stroke. The fuel injection valve injects the fuel during an interval between the intake top dead center and the retarded timing.

## Description

### Technical Field

The present invention relates to a direct-injection internal combustion engine that directly injects fuel into a cylinder.

### Background Art

As disclosed, for instance, in Patent Document 1 (JP-A-2004-176607), there is a conventionally known internal combustion engine having a fuel injection valve that directly injects fuel into a cylinder. Also disclosed in Patent Document 1 is a technology that closes both an intake valve and an exhaust valve to hermetically close a combustion chamber during an exhaust stroke when an engine cold-starts, injects fuel into the hermetically closed combustion chamber, and opens the intake valve immediately after an intake top dead center (exhaust top dead center). As the technology opens the intake valve immediately after the intake top dead center at which an in-cylinder pressure is maximized, a remaining gas in the combustion chamber, which is compressed and heated, is once blown out of the combustion chamber through an intake port. Subsequently, the gas is blown back to the interior of the combustion chamber under sufficient negative pressure that is exerted by a piston during its descent from a top dead center, introduced again into the combustion chamber together with fresh air, and urged to mix with the injected fuel.

### Prior Art Document

### Patent Document

Patent Document 1: JP-A-2004-176607

### Summary of Invention

### Technical Problem

In the above-mentioned conventional internal combustion engine, however, the occurrence of knocking may become evident as the fuel is injected into the high-temperature remaining gas. Further, the fuel needs to be injected before the intake top dead center because the above-mentioned conventional internal combustion engine injects the fuel into the hermetically closed combustion chamber and opens the intake valve immediately after the intake top dead center. Before the intake top dead center, there is still a significant air flow in a cylinder and the in-cylinder air flow varies from one cycle to another. Therefore, when the fuel is injected before the intake top dead center, the status of fuel spray greatly varies from one cycle to another. When the status of fuel spray greatly varies, the amount of fuel adhering, for instance, to the inner wall of the cylinder varies. When the amount of adhering fuel varies, combustion stability decreases.

The present invention has been made to solve the above problem and has an object to provide a direct-injection internal combustion engine capable of suppressing the occurrence of knocking and providing increased combustion stability.

### Solution to Problem

A first aspect of the present invention is a direct-injection internal combustion engine comprising:
a supercharger for supercharging intake air that flows into the internal combustion engine;
a fuel injection valve for directly injecting fuel into a combustion chamber in the internal combustion engine;
valve control means for closing an intake valve and an exhaust valve at a advanced timing advanced from an intake top dead center after the exhaust valve and the intake valve are opened during an exhaust stroke and opening the intake valve at a retarded timing retarded from the intake top dead center during an intake stroke; and
injection control means for causing the fuel injection valve to inject the fuel during an interval between the intake top dead center and the retarded timing.

A second aspect of the present invention is the direct-injection internal combustion engine according to the first aspect, wherein the cubic volume of the combustion chamber at the advanced timing is equal to the cubic volume of the combustion chamber at the retarded timing.

A third aspect of the present invention is the direct-injection internal combustion engine according to the first or the second aspect, wherein the internal combustion engine is a lean-burn engine.

A fourth aspect of the present invention is the direct-injection internal combustion engine according to any one of the first to the third aspects, further comprising:
an ignition plug disposed at a center part of the upper surface of the combustion chamber;
stratified fuel distribution formation means for allowing the intake air to flow along the inner circumference of a cylinder, which forms the combustion chamber, and distributing a fuel layer at a center part of the cylinder and an air layer at a inner circumference part of the cylinder.

A fifth aspect of the present invention is the direct-injection internal combustion engine according to any one of the first to the fourth aspects, wherein the injection control means causes the fuel injection valve to perform fuel injection in a plurality of separate injections during an interval between the intake top dead center and the retarded timing.

A sixth aspect of the present invention is the direct-injection internal combustion engine according to any one of the first to the fourth aspects, wherein the valve control means includes variable valve means, which is capable of relatively changing a timing at which the intake valve closes and a timing at which the exhaust valve closes; and low-load valve control means, which, when the internal combustion engine is operating in a low-load region, causes the variable valve means to control the timing at which the intake valve closes so as to be earlier than the timing at which the exhaust valve closes during the exhaust stroke.

A seventh aspect of the present invention is the direct-injection internal combustion engine according to the sixth aspect, wherein the injection control means includes low-load injection control means, which, when the internal combustion engine is operating in the low-load region, causes the fuel injection valve to perform fuel injection in a plurality of separate injections during an interval between the advanced timing and the retarded timing so that at least the first fuel injection is performed during an interval between the advanced timing and the intake top dead center.

A eighth aspect of the present invention is the direct-injection internal combustion engine according to any one of the first to the fifth aspects, wherein the supercharger is a turbocharger, the direct-injection internal combustion engine further comprising:
a first exhaust valve and a second exhaust valve, which form the exhaust valve;
a first exhaust port, which communicates with the combustion chamber when the first exhaust valve opens;
a second exhaust port, which communicates with the combustion chamber when the second exhaust valve opens; and
a turbine, which is installed downstream of the first exhaust port and used for the turbocharger;
wherein the valve control means opens the intake valve and the second exhaust valve after the first exhaust valve is opened and closed during the exhaust stroke, closes the intake valve at a timing advanced from the intake top dead center after the second exhaust valve is closed, and opens the intake valve at a timing retarded from the intake top dead center during the intake stroke.

### Advantageous Effects of Invention

According to the first aspect of the present invention, the exhaust valve and the intake valve can be opened during the exhaust stroke. Therefore, fresh air can be introduced into the combustion chamber by supercharging to expel a high-temperature remaining gas. This makes it possible to suppress the occurrence of knocking. Further, according to the first aspect of the present invention, the exhaust valve and the intake valve can be closed at a timing advanced from the intake top dead center after they are opened during the exhaust stroke. Therefore, when a piston ascends, air flow in the combustion chamber can be compressed to stop its flow. Furthermore, according to the first aspect of the present invention, the fuel can be injected into the combustion chamber at a timing retarded from the intake top dead center and before the intake valve opens. As the fuel is injected while there is no air flow, the inter-cycle variation in the status of fuel spray can be reduced. As a result, the combustion stability can be increased. Consequently, the present invention can suppress the occurrence of knocking and provide increased combustion stability.

According to the second aspect of the present invention, the cubic volume of the combustion chamber at a timing advanced from the intake top dead center can be made equal to that of the combustion chamber at a timing retarded from the intake top dead center. This makes it possible to avoid work loss due to compression and expansion.

According to the third aspect of the present invention, a lean region can be enlarged because the first and second aspects of the present invention provide increased combustion stability. Enlarging the lean region provides improved fuel efficiency and achieves NOx reduction.

According to the fourth aspect of the present invention, a stratified fuel distribution is formed in which a fuel layer is distributed at the center part of a cylinder while an air layer is distributed at the inner circumference of the cylinder. Further, a stable air-fuel mixture, which does not significantly vary, can be formed near the ignition plug because the first aspect of the present invention suppresses the variation in the distribution of fuel spray. Consequently, the present invention can provide increased combustion stability and enlarge the lean region.

According to the fifth aspect of the present invention, the fuel injection valve can perform fuel injection in a plurality of separate injections during an interval between the intake top dead center and a timing retarded therefrom. As the plurality of separate fuel injections are performed at different temperatures and pressures in the combustion chamber, the penetration force of fuel spray varies. This makes it possible to control the position at which an air-fuel mixture is formed. Consequently, the present invention can generate a uniform air-fuel mixture to reduce NOx, which arises from a nonuniform air-fuel mixture.

According to the sixth aspect of the present invention, the timing at which the intake valve closes can be controlled so as to be earlier than the timing at which the exhaust valve closes during the exhaust stroke when the internal combustion engine operates in a low-load region. Therefore, a large amount of the remaining gas, which is inert, can be introduced in the low-load region where knocking is unlikely to occur. Consequently, the present invention can reduce the NOx.

According to the seventh aspect of the present invention, fuel injection can be performed in a plurality of separate injections when the internal combustion engine operates in the low-load region. At least one fuel injection can be performed between a timing advanced from the intake top dead center and the intake top dead center. Therefore, the first fuel injection is performed to inject the fuel into the high-temperature remaining gas before the intake top dead center. This reforms the fuel. Consequently, the present invention can provide enhanced combustion stability in the low-load region where combustion is basically unstable due to a low temperature.

According to the eighth aspect of the present invention, the intake valve and the second exhaust valve can be opened after the first exhaust valve is opened and closed during the exhaust stroke, and the intake valve can be closed at a timing advanced from the intake top dead center. Unburned HC in the combustion chamber is blown into an intake port 42 and then blown back into the combustion chamber 20. Therefore, the unburned HC can be burned again. Consequently, the present invention can provide improved emissions and improved fuel efficiency.

### Brief Description of Drawings

[Fig. 1] Fig. 1 is a diagram illustrating the configuration of a system according to a first embodiment of the present invention.
[Fig. 2] FIG. 2 is a diagram illustrating the sensitivity of an in-cylinder fuel amount with respect to combustion.
[Fig. 3] FIG. 3 is a diagram illustrating the inter-cycle variation in an intake air flow.
[Fig. 4] FIG. 4 is a diagram that relates to the first embodiment and illustrates timings at which the intake valve 44 and the exhaust valve 48 open and close during the exhaust stroke and intake stroke and a timing at which fuel injection is performed.
[Fig. 5] FIG. 5 is a top view illustrating the configuration of the intake port 42 in the system according to the second embodiment.
[Fig. 6] FIG. 6 is a diagram that relates to the third embodiment and illustrates timings at which the intake valve 44 and the exhaust valve 48 open and close during the exhaust stroke and intake stroke and a timing at which fuel injection is performed.
[Fig. 7] FIG. 7 is a diagram that relates to the fifth embodiment and illustrates timings at which the intake valve 44 and the exhaust valve 48 open and close during the exhaust stroke and intake stroke and a timing at which fuel injection is performed.
[Fig. 8] FIG. 8 is a diagram illustrating the supercharger 34, intake valve 44, and exhaust valve 48 that are included in the system according to the sixth embodiment.
[Fig. 9] FIG. 9 is a diagram that relates to the sixth embodiment and illustrates timings at which the intake valve 44 and the exhaust valve 48 open and close during the exhaust stroke and intake stroke and a timing at which fuel injection is performed.

### Description of Embodiments

Embodiments of the present invention will now be described with reference to the accompanying drawings. Like elements in the drawings are designated by the same reference numerals and will not be redundantly described.

### First Embodiment

### [System configuration of first embodiment]

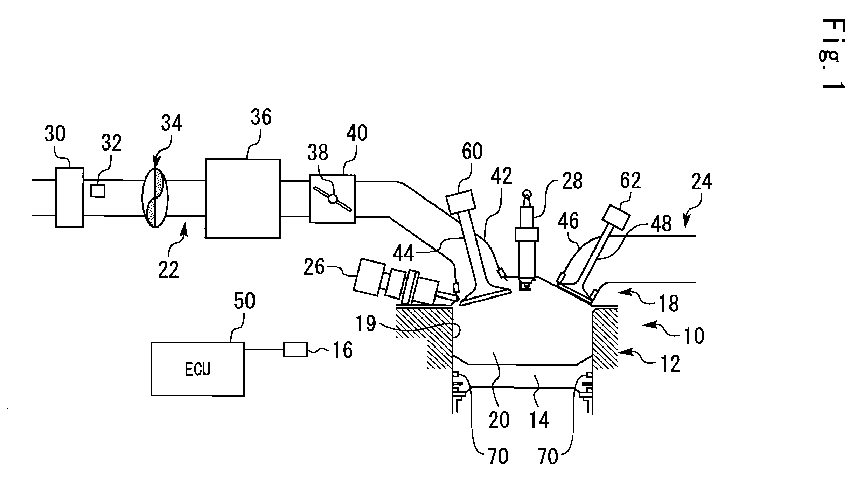

FIG. 1 is a diagram illustrating the configuration of a system according to a first embodiment of the present invention. The system shown in FIG. 1 includes a direct-injection internal combustion engine 10, which is a four-stroke engine. Further, the internal combustion engine 10 is a lean-burn engine. The internal combustion engine 10 has a plurality of cylinders 12 (not shown). A cylinder 12 includes a piston 14, which reciprocates in the cylinder 12. The reciprocating motion of the piston 14 is converted to the rotary motion of a crankshaft. A crank angle sensor 16 is disposed near the crankshaft to detect the rotation angle (crank angle) of the crankshaft.

The internal combustion engine 10 includes a cylinder head 18. A combustion chamber 20 is formed between the underside of the cylinder head 18, the inner wall (cylinder liner 19) of the cylinder 12, and the upper surface of the piston 14. The combustion chamber 20 is connected to an intake path 22 and an exhaust path 24. The cylinder head 18 is provided with a fuel injection valve 26, which injects fuel directly into the center part of the combustion chamber 20. The cylinder head 18 is also provided with an ignition plug 28. The ignition plug 28 is disposed at the center part of the upper surface of the combustion chamber 20.

The intake path 22 is provided with an air cleaner 30. An air flow meter 32 is disposed downstream of the air cleaner 30 to detect an intake air amount. A supercharger 34 is disposed downstream of the air flow meter 32 to perform supercharging. The supercharger 34 is electrically driven or driven by the rotation of the crankshaft to perform supercharging. The supercharger 34 may be a turbocharger that includes a turbine, which is rotated by the energy of exhaust gas, and a compressor, which is rotationally driven by the turbine. In this instance, supercharging may be performed by the compressor.

An inter-cooler 36 is disposed downstream of the supercharger 34. An electronically-controlled throttle valve 38 is disposed downstream of the inter-cooler 36. A throttle opening sensor 40 is disposed near the throttle valve 38 to detect the degree of throttle opening. An intake port 42, which is connected to the combustion chamber 20, is disposed downstream of the throttle valve 38 and formed inside the cylinder head 18. The intake port 42 is included in the intake path 22. An intake valve 44 is disposed at the downstream end of the intake path 22 to open and close the path between the intake port 42 and the combustion chamber 20.

An exhaust valve 48 is disposed at the upstream end of the exhaust path 24 to open and close the path between the combustion chamber 20 and an exhaust port 46. The exhaust port 46 is formed inside the cylinder head 18. The exhaust port 46 is included in the exhaust path 24.

The system according to the first embodiment includes an ECU (Electronic Control Unit) 50. An input section of the ECU 50 is connected to various sensors such as the aforementioned crank angle sensor 16, air flow meter 32, and throttle opening sensor 40. An output section of the ECU 50 is connected to various actuators such as the aforementioned fuel injection valve 26, ignition plug 28, and throttle valve 38. In accordance with information input from the various sensors, the ECU 50 executes a predetermined program to operate the various actuators for the purpose of controlling the operating status of the internal combustion engine 10.

### [Distinctive configuration of first embodiment]

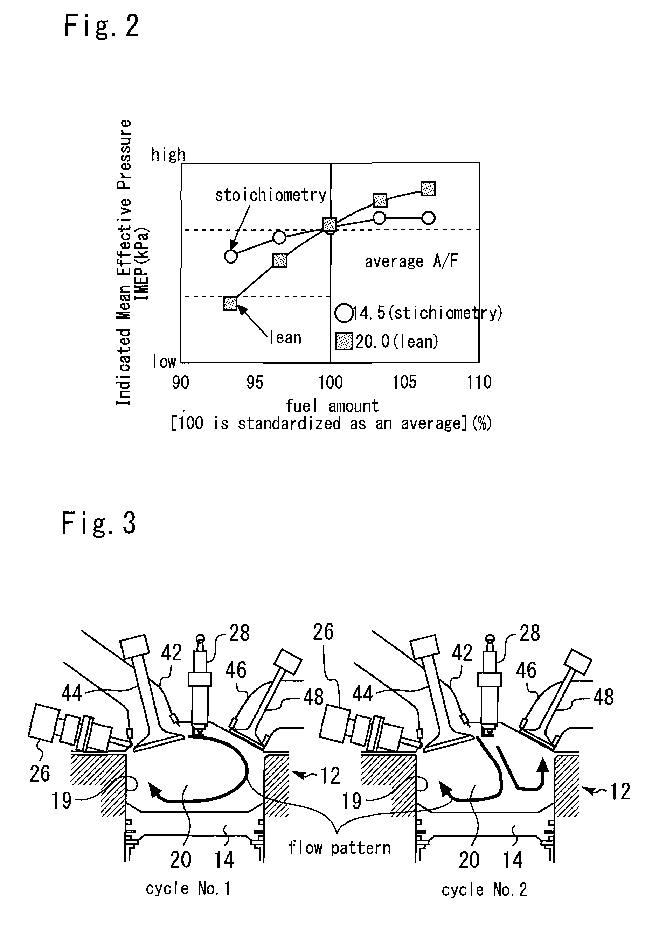

A distinctive configuration of the system according to the first embodiment will now be described with reference to FIGS. 2 to 4. FIG. 2 is a diagram illustrating the sensitivity of an in-cylinder fuel amount with respect to combustion. As shown in FIG. 1, the sensitivity of the in-cylinder fuel amount with respect to combustion is higher in a lean-burn state (e.g., at an air-fuel ratio of 20.0) than in a stoichiometric state (e.g., at an air-fuel ratio of 14.5). As the internal combustion engine 10 operates near a combustion limit in the lean-burn state, it is demanded that combustion be stabilized to expand a lean limit.

FIG. 3 is a diagram illustrating the inter-cycle variation in an intake air flow. As shown in FIG. 3, the intake air flow in the cylinder 12 varies from one cycle to another. A fuel spray injected into intake air flowing into the cylinder 12 is affected by the intake air flow. Therefore, the amount of fuel adhering, for instance, to the inner wall of the cylinder 12 varies from one cycle to another. Further, the fuel spray becomes nonuniform and varies from one cycle to another so that the distribution of the fuel spray varies. As a result, combustion varies from one cycle to another to become unstable.

Moreover, when combustion is unstable in a direct-injection lean-burn engine such as the internal combustion engine 10, the expansion of the lean limit is inhibited.

As such being the case, the system according to the present embodiment provides enhanced combustion stability by avoiding changes in the amount of fuel adhering, for instance, to the inner wall of the cylinder 12 and changes in the distribution thereof, which are caused by the inter-cycle variation in the intake air flow.

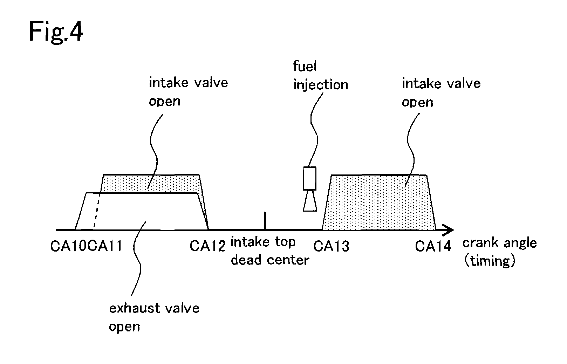

The distinctive configuration of the present embodiment will be concretely described below with reference to FIG. 4. FIG. 4 is a diagram that relates to the first embodiment and illustrates timings at which the intake valve 44 and the exhaust valve 48 open and close during the exhaust stroke and intake stroke and a timing at which fuel injection is performed.

### (Opening/closing timings of intake valve 44 and exhaust valve 48)

In the system according to the present embodiment, the exhaust valve 48 opens at timing CA10, which is close to an exhaust bottom dead center, as shown in FIG. 4. At timing CA11, which is later than timing CA10, the intake valve 44 opens. At timing CA12, which is advanced from the intake top dead center (exhaust top dead center) after timing CA11, the exhaust valve 48 and the intake valve 44 both close. Further, at timing CA13, which is retarded from the intake top dead center, the intake valve 44 opens. Timings CA12 and CA13 are set so that the cubic volume of the combustion chamber 20 remains the same at their respective crank angles. This makes it possible to avoid work loss due to compression and expansion.

The system according to the present embodiment includes valve trains 60, 62 (see FIG. 1) that open or close the intake valve 44 and the exhaust valve 48, respectively, at the above-mentioned timings. The valve train 60 on the intake side includes an ordinary cam as well as a cam having two lift sections for opening the intake valve 44 two times during the exhaust stroke and intake stroke. The valve train 60 is connected to the output section of the ECU 50 and capable of switching between the ordinary cam and the cam having the two lift sections in accordance with a control signal from the ECU 50. The valve train 62 on the exhaust side is connected to the output section of the ECU 50 and capable of changing the valve timing of the exhaust valve 48 in accordance with a control signal from the ECU 50. In a high-load region, for example, the ECU 50 outputs control signals to the valve trains 60, 62 to provide valve timing shown in FIG. 4.

An operating region is determined by an engine speed and load. The engine speed can be calculated in accordance with a value detected by the crank angle sensor. The load can be calculated in accordance, for instance, with the engine speed and throttle opening.

### (Fuel injection timing)

In the system according to the present embodiment, the fuel is injected into the combustion chamber 20 during an interval between the intake top dead center and timing CA13 at which the intake valve 44 opens. More specifically, the fuel injection is started after the intake top dead center and completed immediately before timing CA13. The ECU 50 outputs a control signal to the fuel injection valve 26 so as to complete the fuel injection immediately before timing CA13.

### (Operations and effects)

The system according to the present embodiment, which has been described above, keeps the exhaust valve 48 and intake valve 44 open between timing CA11 and timing CA12 during the exhaust stroke. Therefore, fresh air can be supercharged and introduced into the combustion chamber 20 to expel a high-temperature remaining gas. This makes it possible to suppress the occurrence of knocking.

Further, the cubic volume of the combustion chamber 20 is decreased due to compression provided by the piston 14 during an interval between timing CA12 at which the exhaust valve 48 and intake valve 44 close and the intake top dead center. Therefore, the air flow in the combustion chamber 20 can be compressed and eliminated. Fuel injection is then performed in a state where there is no air flow, which prevails before timing CA13 at which the intake valve 44 opens. Consequently, the inter-cycle variation in the shape of fuel spray can be reduced. This makes it possible to reduce the variation in the amount of fuel adhering, for instance, to the inner wall of the cylinder 12 and suppress the variation in the distribution of fuel spray.

Moreover, the system according to the present embodiment injects the fuel during an interval between the intake top dead center and timing CA13 at which the intake valve 44 opens. When the fuel is injected at a timing at which the in-cylinder pressure and temperature are high, it is possible to reduce the penetration force of and facilitate the vaporization of the fuel spray. This makes it possible to avoid changes in the amount of in-cylinder fuel by reducing the amount of fuel adhering, for instance, the inner wall of the cylinder 12. In addition, the fuel injection is completed immediately before timing CA13 at which the intake valve 44 opens. This makes it possible to suitably suppress the occurrence of knocking in the high-load region.

As described above, the system according to the present embodiment can decrease the amount of fuel adhering, for instance, to the inner wall of the cylinder 12, reduce the variation in the amount of such fuel adherence, and suppress the variation in the distribution of fuel spray. This makes it possible to provide increased combustion stability and enlarge the lean region. Enlarging the lean region provides improved fuel efficiency and achieves NOx reduction.

In the system according to the first embodiment, which has been described above, it is assumed that the ECU 50 outputs a control signal in the high-load region to provide valve timing shown in FIG. 4. However, the operating region in which the control signal is output is not limited to the high-load region. The control signal may also be output in an operating region other than the high-load region.

In the first embodiment, which has been described above, the supercharger 34 corresponds to the "supercharger" according to the first aspect of the present invention; the fuel injection valve 26 corresponds to the "fuel injection valve" according to the first aspect of the present invention; the valve trains 60, 62 and the ECU 50 correspond to the "valve control means" according to the first aspect of the present invention; the ECU 50 corresponds to the "injection control means" according to the first aspect of the present invention; and the internal combustion engine 10 corresponds to the "lean-burn engine" according to the third aspect of the present invention. Further, timing CA12 corresponds to the "advanced timing" according to the first or second aspect of the present invention; and timing CA13 corresponds to the "retarded timing" according to the first or second aspect of the present invention.

### Second Embodiment

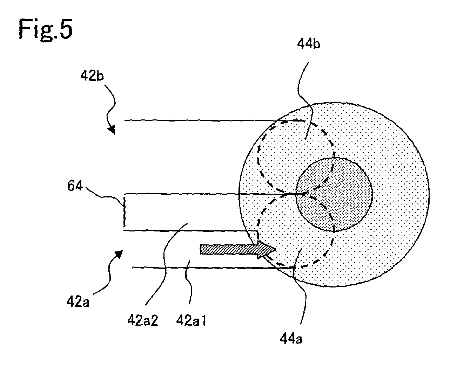

A second embodiment of the present invention will now be described with reference to FIG. 5. The system according to the second embodiment has the same configuration as the system according to the first embodiment except that the former includes elements described with reference to FIG. 5.

### [Distinctive configuration of second embodiment]

FIG. 5 is a top view illustrating the configuration of the intake port 42 in the system according to the second embodiment. As shown in FIG. 5, the intake valve 44 includes two intake valves 44a, 44b. The intake port 42 includes an intake port 42a and an intake port 42b. The intake port 42a communicates with the combustion chamber 20 when the intake valve 44a opens. The intake port 42b communicates with the combustion chamber 20 when the intake valve 44b opens. The intake port 42a according to the present embodiment has a longitudinal partition wall. Therefore, the intake port 42a is separated into two paths 42a1, 42a2. Intake air passing through the path 42a1 flows along the inner circumferential surface of the cylinder 12. On the other hand, intake air passing through the path 42a2 flows into the center part of the cylinder 12. The path 42a2 is provided with an intake control valve 64, which opens and closes the path 42a2. The intake control valve 64 is connected to the output side of the ECU 50.

The valve train 60 in the system according to the present embodiment is a variable valve train capable of switching between a state where the cam rotation force is transmitted to the intake valves 44a, 44b and a state where the cam rotation force is transmitted to the intake valve 44a only. In an operating region other than the high-load region, for example, the ECU 50 outputs a control signal to the valve train 60 in order to transmit the cam rotation force to the intake valve 44a only. As a result, the intake valve 44a opens and closes while the intake valve 44b is closed.

Further, the ECU 50 outputs a control signal to the intake control valve 64 in order to close the path 42a2. As a result, the intake control valve 64 closes the path 42a2. When the path 42a2 is closed, the intake air does not flow into the center part of the cylinder 12, but flows to the inner circumference of the cylinder 12 through the path 42a1. Consequently, a swirl flow is formed along the inner circumferential surface (inner wall) of the cylinder 12.

The system according to the second embodiment, which has been described above, forms a stratified fuel distribution in which a fuel layer is formed at the center part of the cylinder 12 while an air layer is formed at the inner circumference of the cylinder 12. Further, a stable air-fuel mixture, which does not significantly vary, is formed near the ignition plug 28 because the variation in the distribution of fuel spray is limited, as is the case with the first embodiment. This makes it possible to provide increased combustion stability and enlarge the lean region.

In the second embodiment, which has been described above, the ignition plug 28 corresponds to the "ignition plug" according to the fourth aspect of the present invention; and the intake port 42, the intake valve 44, the valve train 60, the intake control valve 64, and the ECU 50 correspond to the "stratified fuel distribution formation means" according to the fourth aspect of the present invention.

### Third Embodiment

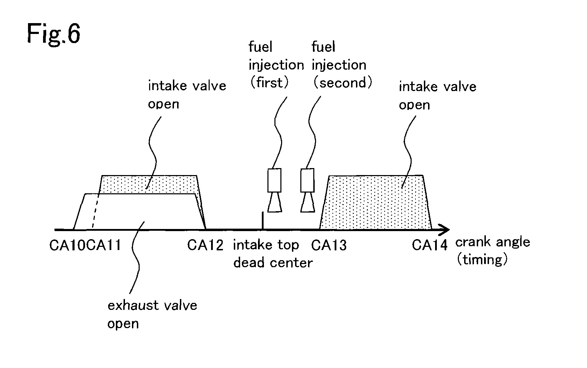

A third embodiment of the present invention will now be described with reference to FIG. 6. The system according to the third embodiment has the same configuration as the system according to the first embodiment except that the former includes elements described with reference to FIG. 6.

### [Distinctive configuration of third embodiment]

FIG. 6 is a diagram that relates to the third embodiment and illustrates timings at which the intake valve 44 and the exhaust valve 48 open and close during the exhaust stroke and intake stroke and a timing at which fuel injection is performed. The configuration shown in FIG. 6 is the same as the configuration shown in FIG. 4 except that they differ in fuel injection timing. Therefore, the timings at which the intake valve 44 and the exhaust valve 48 open and close during the exhaust stroke and intake stroke are identified by the same symbols as those in FIG. 4 and will be briefly described or omitted from the following description.

As shown in FIG. 6, the system according to the present embodiment injects the fuel into the combustion chamber 20 by performing fuel injection in two separate injections during an interval between the intake top dead center and timing CA13 at which the intake valve 44 opens. The ECU 50 first references, for instance, a map stored in the ECU 50 and calculates a total fuel injection amount for the current cycle in accordance with the operating status. Next, the ECU 50 divides the total fuel injection amount into two in accordance with a predetermined fuel injection ratio and performs fuel injection in two separate injections. More specifically, the ECU 50 outputs a control signal to the fuel injection valve 26 so that the two fuel injections are completed immediately before timing CA13. The above-mentioned fuel injection ratio is predetermined by experiment or simulation and stored in the ECU 50.

The first and second fuel injections are performed at different temperatures and pressures in the combustion chamber 20. More specifically, the first fuel injection is performed in the combustion chamber 20 at a temperature higher than and at a pressure higher than the second fuel injection. Therefore, the penetration force of fuel spray is lower in the first fuel injection than in the second fuel injection. The position at which the air-fuel mixture is formed can be controlled by making use of the difference in the penetration force of fuel spray. Further, as part of the fuel is burned upon the first fuel injection, the stability of combustion invoked by the second fuel injection is increased. This effect is particularly preferred in a low-load region.

Moreover, in the low-load region and high-load region, the ECU 50 may set a higher fuel injection ratio for the first fuel injection than the predetermined one (e.g., the fuel injection ratio for the second fuel injection). In the low-load region, this makes it possible to inject a large amount of fuel into the cylinder that is maintained at a high temperature and at a high pressure, thereby providing increased combustion stability. In the high-load region, this makes it possible to increase the length of vaporization time, thereby providing increased combustion stability.

As described above, the system according to the present embodiment can generate a uniform air-fuel mixture by controlling the position at which the air-fuel mixture is formed. This makes it possible to reduce NOx, which arises from a nonuniform air-fuel mixture, and provide preferred emissions.

The system according to the third embodiment, which has been described above, may concurrently use the configuration shown in FIG. 5, which is described in connection with the second embodiment. The same holds true for later-described embodiments.

In the third embodiment, which has been described above, the ECU 50 corresponds to the "injection control means" according to the fifth aspect of the present invention.

### Fourth Embodiment

A fourth embodiment of the present invention will now be described. The system according to the fourth embodiment has the same configuration as the system according to the first embodiment except that the timing at which the exhaust valve 48 and the intake valve 44 close during the exhaust stroke varies with the operating region.

### [Distinctive configuration of fourth embodiment]

The system according to the first embodiment, which is described earlier, simultaneously close the exhaust valve 48 and the intake valve 44 at timing CA12, which is advanced from the intake top dead center, as shown in FIG. 4. Meanwhile, the system according to the fourth embodiment closes the intake valve 44 earlier than the exhaust valve 48 during the exhaust stroke when the internal combustion engine is operating in the low-load region. In the high-load region, on the other hand, the system according to the fourth embodiment closes the intake valve 44 later than the exhaust valve 48 during the exhaust stroke.

Valve control described above can be implemented when, for instance, the valve train 60 includes a low-load region cam, which is set to close the intake valve 44 at a timing advanced from timing CA12 during the exhaust stroke, and a high-load region cam, which is set to close the intake valve 44 at a timing retarded from timing CA12 during the exhaust stroke, and the ECU 50 outputs a control signal that causes the valve train 60 to switch between the two cams in accordance with the operating region. The above-described valve control can also be implemented when the ECU 50 outputs a control signal that causes the exhaust valve train 62 to change the valve timing of the exhaust valve 48.

As described above, the system according to the present embodiment can not only provide the effects described in connection with the first embodiment but also introduce a large amount of inert remaining gas in the low-load region where knocking is unlikely to occur. As a result, NOx can be reduced. In the high-load region, on the other hand, the system according to the present embodiment can sufficiently expel the remaining gas to suitably suppress the occurrence of knocking.

In the fourth embodiment, which has been described above, the valve trains 60, 62 correspond to the "variable valve means" according to the sixth aspect of the present invention; and the ECU 50 corresponds to the "low-load valve control means" according to the sixth aspect of the present invention.

### Fifth Embodiment

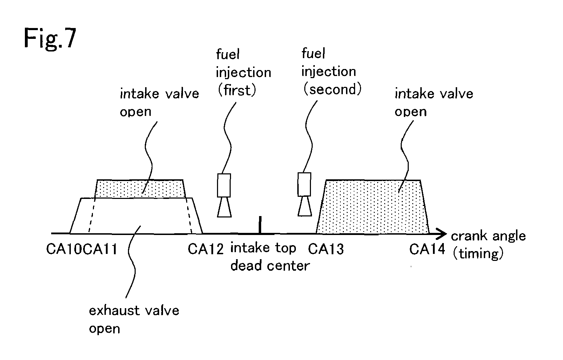

A fifth embodiment of the present invention will now be described with reference to FIG. 7. The system according to the fifth embodiment has the same configuration as the system according to the fourth embodiment except that they differ in fuel injection timing.

### [Distinctive configuration of fifth embodiment]

FIG. 7 is a diagram that relates to the fifth embodiment and illustrates timings at which the intake valve 44 and the exhaust valve 48 open and close during the exhaust stroke and intake stroke and a timing at which fuel injection is performed. Valve timing shown in FIG. 7 indicates that the operating region described in connection with the fourth embodiment is the low-load region. More specifically, the intake valve 44 closes earlier than the exhaust valve 48 during the exhaust stroke.

When the internal combustion engine is operating in the low-load region, the system according to the fifth embodiment injects the fuel into the combustion chamber 20 by performing fuel injection in two separate injections. More specifically, the first fuel injection is performed during an interval between the instant at which the intake valve 44 and the exhaust valve 48 close during the exhaust stroke and the intake top dead center. The second fuel injection is performed during an interval between the intake top dead center and timing CA13 at which the intake valve 44 opens.

As described above, the system according to the present embodiment can introduce a large amount of inert remaining gas in the low-load region where knocking is unlikely to occur, as is the case with the fourth embodiment. Further, as the first fuel injection is performed before the intake top dead center, the fuel is injected into a high-temperature remaining gas. This reforms the fuel. Consequently, increased combustion stability is provided in the low-load region where combustion is basically unstable due to a low temperature.

In the fifth embodiment, which has been described above, the ECU 50 corresponds to the "low-load injection control means" according to the seventh aspect of the present invention.

### Sixth Embodiment

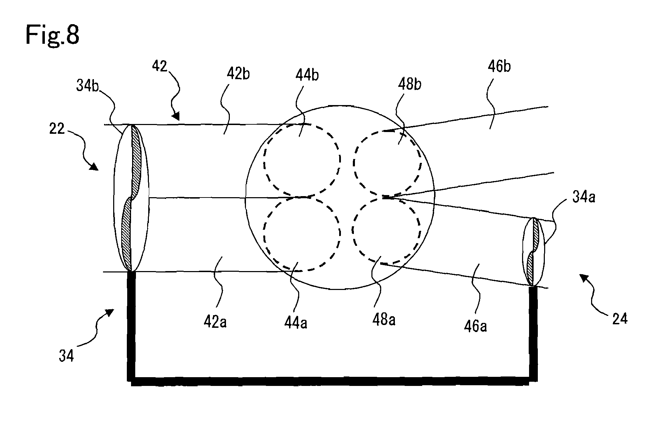

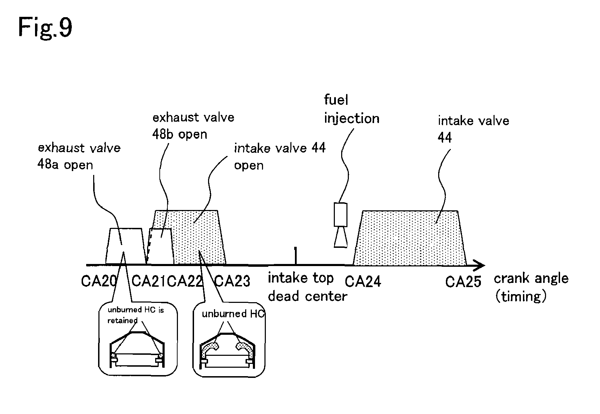

A sixth embodiment of the present invention will now be described with reference to FIGS. 8 and 9. The basic configuration of the system according to the sixth embodiment is the same as shown in FIG. 1. The system according to the sixth embodiment is implemented when it includes distinctive elements described with reference to FIGS. 8 and 9.

### [Distinctive configuration of sixth embodiment]

FIG. 8 is a diagram illustrating the supercharger 34, intake valve 44, and exhaust valve 48 that are included in the system according to the sixth embodiment. The supercharger 34 included in the system according to the present embodiment is a turbocharger that uses the energy of exhaust gas to perform supercharging. The turbocharger includes a turbine 34a, which is rotated by the energy of the exhaust gas, and a compressor 34b, which is rotationally driven by the turbine 34a.

As shown in FIG. 8, the intake valve 44 includes two intake valves 44a, 44b. The intake port 42 includes the intake port 42a, which communicates with the combustion chamber 20 when the intake valve 44a opens, and the intake port 42b, which communicates with the combustion chamber 20 when the intake valve 44b opens. The exhaust valve 48 includes two exhaust valves 48a, 48b. The exhaust port 46 includes an exhaust port 46a, which communicates with the combustion chamber 20 when the exhaust valve 48a opens, and an exhaust port 46b, which communicates with the combustion chamber 20 when the exhaust valve 48b opens. The turbine 34a is installed in the exhaust path 24 and disposed downstream of the exhaust port 46a. The common compressor 34b is installed in the intake path 22 and disposed upstream of the intake ports 42a, 42b. The intake ports 42a, 42b are hereinafter simply referred to as the intake port 42 when they need not be distinguished from each other.

FIG. 9 is a diagram that relates to the sixth embodiment and illustrates timings at which the intake valve 44 and the exhaust valve 48 open and close during the exhaust stroke and intake stroke and a timing at which fuel injection is performed.

### (Opening/closing timings of intake valve 44 and exhaust valve 48)

In the system according to the present embodiment, the exhaust valve 48a opens at timing CA20, which is near the exhaust bottom dead center, as shown in FIG. 9. At timing CA21, which is later than timing CA20, the exhaust valve 48 closes. Further, the exhaust valve 48b and the intake valve 44 open at timing CA21. After the exhaust valve 48b is closed at timing CA22, which is later than timing CA21, the intake valve 44 closes at timing CA23, which is advanced from the intake top dead center. Further, the intake valve 44 opens at timing CA24, which is retarded from the intake top dead center. Timings CA23 and CA24 are set so that the cubic volume of the combustion chamber 20 remains the same at their respective crank angles. This makes it possible to avoid work loss due to compression and expansion.

### (Fuel injection timing)

In the system according to the present embodiment, the fuel is injected into the cylinder 12 during an interval between the intake top dead center and timing CA24 at which the intake valve 44 opens. More specifically, the fuel injection is started after the intake top dead center and completed immediately before timing CA24. The ECU 50 outputs a control signal to the fuel injection valve 26 so as to complete the fuel injection immediately before timing CA24.

### (Operations and effects)

The system according to the present embodiment, which has been described above, keeps only the exhaust valve 48a open between timing CA20 and timing CA21 during the exhaust stroke. This ensures that high-temperature, high-pressure exhaust gas is supplied to the turbine 34a. Therefore, the compressor 34b can be suitably driven. Further, as only the exhaust valve 48a positioned toward the turbine 34a opens, the pressure in the combustion chamber 20 is high so that unburned HC is retained in a gap between the piston 14, the cylinder liner 19, and a piston ring 70 (FIG. 9).

Subsequently, at timing CA21, the exhaust valve 48a closes and the intake valve 44 and the exhaust valve 48b open. The pressure in the combustion chamber 20 is then lowered so that the unburned HC is discharged into the combustion chamber 20. Part of the unburned HC is blown into the intake port 42. The exhaust valve 48b closes before the unburned HC discharged into the combustion chamber 20 is completely expelled (timing CA22). The unburned HC blown into the intake port 42 is then blown back into the combustion chamber 20 before the intake valve 44 closes (timing CA23). Thus, the unburned HC can be burned again. As described above, the system according to the present embodiment can provide improved emissions and improved fuel efficiency. In addition, the system according to the present embodiment provides the same effects as the system according to the first embodiment because the fuel injection is performed during an interval between the intake top dead center and timing CA25 at which the intake valve 44 opens, as is the case with the first embodiment.

In the sixth embodiment, which has been described above, the supercharger 34 corresponds to the "turbocharger" according to the eighth aspect of the present invention; the exhaust valve 48a corresponds to the "first exhaust valve" according to the eighth aspect of the present invention; the exhaust valve 48b corresponds to the "second exhaust valve" according to the eighth aspect of the present invention; the exhaust port 46a corresponds to the "first exhaust port" according to the eighth aspect of the present invention; the exhaust port 46b corresponds to the "second exhaust port" according to the eighth aspect of the present invention; the turbine 34a corresponds to the "turbine" according to the eighth aspect of the present invention; and the valve trains 60, 62 and the ECU 50 correspond to the "valve control means" according to the eighth aspect of the present invention.

### Reference Signs List

- 10: internal combustion engine
- 12: cylinder
- 14: piston
- 16: crank angle sensor
- 18: cylinder head
- 19: cylinder liner
- 20: combustion chamber
- 22: intake path
- 24: exhaust path
- 26: fuel injection valve
- 28: ignition plug
- 30: air cleaner
- 32: air flow meter
- 34: supercharger
- 34a: turbine
- 34b: compressor
- 36: inter-cooler
- 38: throttle valve
- 40: throttle opening sensor
- 42, 42a, 42b: intake port
- 42a1, 42a2: path
- 44, 44a, 44b: intake valve
- 46, 46a, 46b: exhaust port
- 48, 48a, 48b: exhaust valve
- 50: ECU (Electronic Control Unit)
- 60, 62: valve train
- 64: intake control valve
- 70: piston ring

## Claims

1. A direct-injection internal combustion engine comprising:
a supercharger for supercharging intake air that flows into the internal combustion engine;
a fuel injection valve for directly injecting fuel into a combustion chamber in the internal combustion engine;
valve control means for closing an intake valve and an exhaust valve at a advanced timing advanced from an intake top dead center after the exhaust valve and the intake valve are opened during an exhaust stroke and opening the intake valve at a retarded timing retarded from the intake top dead center during an intake stroke; and
injection control means for causing the fuel injection valve to inject the fuel during an interval between the intake top dead center and the retarded timing.

2. The direct-injection internal combustion engine according to claim 1, wherein the cubic volume of the combustion chamber at the advanced timing is equal to the cubic volume of the combustion chamber at the retarded timing.

3. The direct-injection internal combustion engine according to claim 1 or 2, wherein the internal combustion engine is a lean-burn engine.

4. The direct-injection internal combustion engine according to any one of claims 1 to 3, further comprising:
an ignition plug disposed at a center part of the upper surface of the combustion chamber;
stratified fuel distribution formation means for allowing the intake air to flow along the inner circumference of a cylinder, which forms the combustion chamber, and distributing a fuel layer at a center part of the cylinder and an air layer at a inner circumference part of the cylinder.

5. The direct-injection internal combustion engine according to any one of claims 1 to 4, wherein the injection control means causes the fuel injection valve to perform fuel injection in a plurality of separate injections during an interval between the intake top dead center and the retarded timing.

6. The direct-injection internal combustion engine according to any one of claims 1 to 4, wherein the valve control means includes variable valve means, which is capable of relatively changing a timing at which the intake valve closes and a timing at which the exhaust valve closes; and low-load valve control means, which, when the internal combustion engine is operating in a low-load region, causes the variable valve means to control the timing at which the intake valve closes so as to be earlier than the timing at which the exhaust valve closes during the exhaust stroke.

7. The direct-injection internal combustion engine according to claim 6, wherein the injection control means includes low-load injection control means, which, when the internal combustion engine is operating in the low-load region, causes the fuel injection valve to perform fuel injection in a plurality of separate injections during an interval between the advanced timing and the retarded timing so that at least the first fuel injection is performed during an interval between the advanced timing and the intake top dead center.

8. The direct-injection internal combustion engine according to any one of claims 1 to 5, wherein the supercharger is a turbocharger, the direct-injection internal combustion engine further comprising:
a first exhaust valve and a second exhaust valve, which form the exhaust valve;
a first exhaust port, which communicates with the combustion chamber when the first exhaust valve opens;
a second exhaust port, which communicates with the combustion chamber when the second exhaust valve opens; and
a turbine, which is installed downstream of the first exhaust port and used for the turbocharger;
wherein the valve control means opens the intake valve and the second exhaust valve after the first exhaust valve is opened and closed during the exhaust stroke, closes the intake valve at a timing advanced from the intake top dead center after the second exhaust valve is closed, and opens the intake valve at a timing retarded from the intake top dead center during the intake stroke.
